# EUROPÄISCHE PATENTSCHRIFT

(11) **EP 2 427 855 B1**
(45) Veröffentlichungstag und Bekanntmachung des Hinweises auf die Patenterteilung: **21.06.2017**
(21) Anmeldenummer: 10715502.0
(22) Anmeldetag: 16.04.2010
(51) Int. Cl.: G06K 9/00, G01S 13/93, G08G 1/16

(54) **VERFAHREN ZUR DARSTELLUNG VON OBJEKTEN AUS DER UMGEBUNG EINES FAHRZEUGS AUF DER ANZEIGE EINER ANZEIGEVORRICHTUNG**
METHOD FOR THE PRESENTATION ON THE DISPLAY PORTION OF A DISPLAY DEVICE OF OBJECTS PRESENT IN THE NEIGHBORHOOD OF A VEHICLE
PROCÉDÉ POUR LA REPRÉSENTATION D'OBJETS PRÉSENTS DANS LE CHAMP ENVIRONNANT D'UN VÉHICULE SUR L'AFFICHAGE D'UN APPAREIL D'AFFICHAGE

(30) Priorität: 07.05.2009 DE 102009020328
(43) Veröffentlichungstag der Anmeldung: 14.03.2012
(73) Patentinhaber: Bayerische Motoren Werke Aktiengesellschaft, 80809 München (DE)
(72) Erfinder: AUGST, Alexander, 80937 Muenchen (DE)
(86) Internationale Anmeldenummer: PCT/EP2010/002330
(87) Internationale Veröffentlichungsnummer: WO 2010/127761

(56) Entgegenhaltungen:
- EP-A1- 0 686 865
- EP-A1- 1 892 688
- WO-A1-2007/009835
- WO-A1-2008/029802
- FR-A5- 2 149 813
- JP-A- 2003 087 781
- US-A1- 2003 218 676
- US-A1- 2004 036 768
- US-A1- 2006 164 219
- US-A1- 2008 316 011
- HUANG K S ET AL: "Driver's view and vehicle surround estimation using onmidirectional video stream" INTELLIGENT VEHICLES SYMPOSIUM, 2003. PROCEEDINGS. IEEE JUNE 9-11, 2003, PISCATAWAY, NJ, USA,IEEE, 9. Juni 2003 (2003-06-09), Seiten 444-449, XP010645918 ISBN: 978-0-7803-7848-3
- VIOLA P ET AL: "Rapid object detection using a boosted cascade of simple features" PROCEEDINGS 2001 IEEE CONFERENCE ON COMPUTER VISION AND PATTERN RECOGNITION. CVPR 2001. KAUAI, HAWAII, DEC. 8 - 14, 2001; [PROCEEDINGS OF THE IEEE COMPUTER CONFERENCE ON COMPUTER VISION AND PATTERN RECOGNITION], LOS ALAMITOS, CA, IEEE COMP. SOC, US, Bd. 1, 8. Dezember 2001 (2001-12-08), Seiten 511-518, XP010583787 ISBN: 978-0-7695-1272-3

## Beschreibung

Die Erfindung betrifft ein Verfahren und eine Vorrichtung zur Darstellung von unterschiedlich gut sichtbaren Objekten aus der Umgebung eines Fahrzeugs auf der Anzeige einer Anzeigevorrichtung.

Aus dem Stand der Technik sind Nachtsicht-Systeme bekannt, bei denen mit einer Ferninfrarotkamera ein Bild der Umgebung des Fahrzeugs erfasst wird und auf einem Display im Fahrzeuginnenraum angezeigt wird. Es werden hierdurch Hindernisse bzw. Objekte sichtbar, welche durch das menschliche Auge bei Dunkelheit nicht gesehen werden können. Es sind auch Objekterkennungssysteme bekannt, die basierend auf einer im Infrarotspektrum erfassten Umgebung automatische Objekterkennung durchführen. Somit können auch solche Objekte automatisch erkannt werden, die im sichtbaren Spektrum nicht oder nur wenig Licht abstrahlen oder reflektieren, aber eine von ihrer Umgebung unterschiedliche Temperatur haben. Es ist außerdem bekannt, dass eine automatische Erkennung von einem Objekt einer bestimmten Klasse in der Umgebung des Fahrzeugs als eine Fahrerwarnung, z.B. ein Piktogramm auf einer Anzeige im Innenraum des Fahrzeugs, ausgegeben werden kann. Wird mit einem Nachtsicht-System beispielsweise ein Fußgänger erkannt, erscheint auf dem Display ein warnendes symbolisches Piktogramm, das einem Fußgänger entspricht. Die mittels des Nachtsicht-Systems erkannten Hindernisse können auch direkt im Bild des Nachtsicht-Systems auf dem Display, z.B. mittels einer Umrandung oder Färbung des Hindernisses, hervorgehoben werden.

US 2006/164219 A1 legt ein Verfahren zur Warnung des Fahrers eines Fahrzeugs offen, wobei Objekte in der Umgebung des Fahrzeugs detektiert werden, die für den Fahrer nicht sichtbar sind. Dann werden kleine Warnsymbole an der Windschutzscheibe in Blickrichtung des Fahrers projektiert, die den detektierten Objekten entsprechen. Objekte werden anhand von Infrarotbildern detektiert.

US 2003/218676 A1 offenbart ein Infrarotabbildungssystem zur Detektion von Fußgängern vor dem Fahrzeug, wobei Spitze einer Temperaturverteilung anhand von Schwellwerten detektiert werden.

WO 2008/029802 A1 legt ein Verfahren offen, wobei die Umgebung eines Fahrzeugs erfasst wird und die Blickrichtung des Fahrers ermittelt wird, um zu ermitteln, ob die Objekte der Umgebung für den Fahrer sichtbar sind.

WO 2007/009835 A1 offenbart ein Verfahren zur Anzeige von Spurmarkierungen, so dass die Fahrspuren aus der Perspektive des Fahrers besser erkennbar sind.

US 2004/036768 A1 offenbart ein externes Gerät, das eine Kamera und eine Anzeigevorrichtung aufweist, wobei die Kamera an einem Fahrzeug befestigt werden kann und die mit der Kamera aufgenommen Bilder auf der Anzeigevorrichtung gezeigt werden können. In der Druckschrift DE 10 2005 020 772 A1 ist ein Anzeigesystem zur Darstellung der Umgebung eines Kraftfahrzeugs beschrieben, wobei mittels einer Ferninfrarotkamera die Fahrzeugumgebung erfasst wird. Dabei werden erkannte Objekte, welche für das Fahrzeug als gefährlich eingestuft werden, in einem Head-Up-Display des Kraftfahrzeugs hervorgehoben dargestellt.

In der Druckschrift EP 1 647 807 A1 ist ein Fahrerassistenzsystem beschrieben, bei welchem dem Fahrer zur Fahrunterstützung ein virtuelles, vorausfahrendes Fahrzeug in einem Display, beispielsweise einem Head-Up-Display, wiedergegeben wird und in Abhängigkeit von der ermittelten Fahrsituation dem Fahrer auf dem Display Fahranweisungen gegeben werden.

In der Druckschrift DE 10 2005 062 151 A1 ist ein Verfahren und eine Vorrichtung zur Unterstützung eines Fahrzeugführers bei der Passage von Fahrwegsverengungen beschrieben. Dabei werden mittels wenigstens einer Kamera Bilddaten von dem Verkehrsumfeld des Fahrzeugs erfasst und ausgehend von den Abmessungen des Fahrzeugs eine Darstellung der zukünftigen Positionen des Fahrzeugs generiert, welche mit den Bilddaten der Kamera überlagert werden. Aus der Darstellung kann der Fahrer erkennen, ob er mit seinem Fahrzeug eine vor dem Fahrzeug liegende Fahrwegsverengung passieren kann.

Aus dem Stand der Technik sind ferner verschiedene Systeme zur Erkennung von Straßenmarkierungen mit Hilfe von in einem Fahrzeug verbauten Vorrichtungen bekannt.

Aus dem Stand der Technik sind ferner objekterkennende Systeme zur Erkennung von Hindernissen auf der Fahrbahn bekannt. Insbesondere ist eine Fusion eines 3D-TOF-Sensors (TOF = Time of Flight) und einer monokularen Kamera aus dem öffentlichen Forschungsprojekt "MIDIAS" bekannt. Mit dem TOF-Sensor werden Objekte basierend auf den Laufzeiten des ausgesendeten, von den Objekten reflektierten und anschließend empfangenen Lichts gemessen und daraus die Entfernungen zu den Objekten für unterschiedliche Raumwinkel ermittelt. Daraus wird eine 3D-Karte der Szene erstellt. Bei der genannten Sensorfusion werden die Sensordaten von dem TOF-Sensor und von der monokularen Kamera über dieselben Raumwinkel durchgeführt. Dabei können die Vorteile beider Sensortypen vereinigt werden. Insbesondere wird der Vorteil der hohen Winkelauflösung einer monokularen Kamera, welche jedoch nur wenig Information über die Objektentfernung liefert, mit dem Vorteil der über dieselben Objekte ermittelten Tiefeninformation des 3D-Sensors vereint, der an sich eine relativ niedrige Winkelauflösung besitzt.

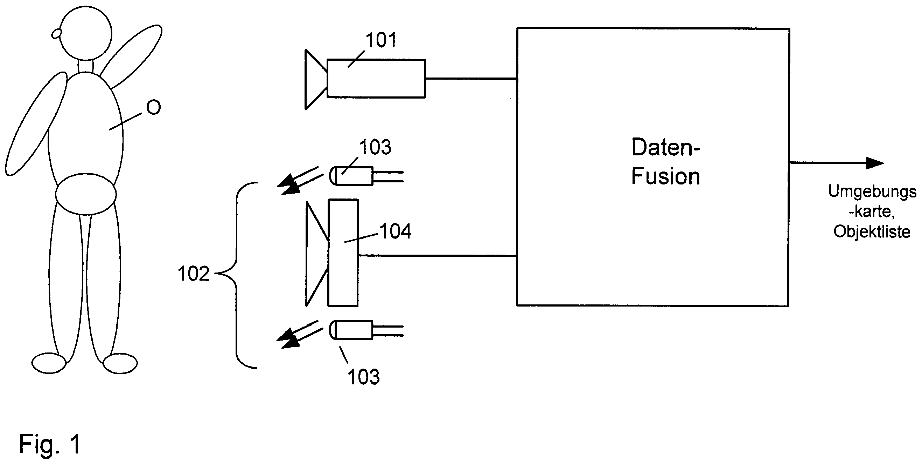

Fig. 1 zeigt schematisch den Aufbau eines Kamerasystems basierend auf einer solchen Sensorfusion. Ein zu erkennendes Objekt O, welches beispielhaft als eine Person dargestellt ist, wird dabei sowohl von einer monokularen Kamera 101 als auch von einem entsprechenden TOF-Sensor 102 erfasst. Der TOF-Sensor beinhaltet dabei entsprechende Mittel 103 zur Aussendung von Infrarotstrahlung sowie ein Mittel 104 zum Empfang der an entsprechenden Objekten reflektierten Infrarotstrahlung. Die Daten der Kamera und des Sensors werden dann fusioniert, und darauf aufbauend wird beispielsweise eine Umgebungskarte bzw. eine Liste der erkannten Objekte ermittelt.

Bekannte objekterkennende Systeme erzeugen oftmals eine Vielzahl von Warnungen und sonstiger, durch den Benutzer zu beachtender Information. Auch Kamerabilder, die umfangreiche Teile der Umgebung anzeigen, können eine Informationsüberflutung beim Fahrer erzeugen. Ein Insasse des Fahrzeugs hat dabei die Schwierigkeit, eine zum Teil sehr große Menge von Information wahrzunehmen und vor Allem die Hinweise und Warnungen auf die reale Umgebung zu beziehen. Darüber hinaus wird durch bekannte Systeme oftmals eine sehr große Anzahl an erkannten Objekten wiedergegeben, wodurch die Wahrnehmung des Insassen und insbesondere des Fahrers des Fahrzeugs überlastet wird.

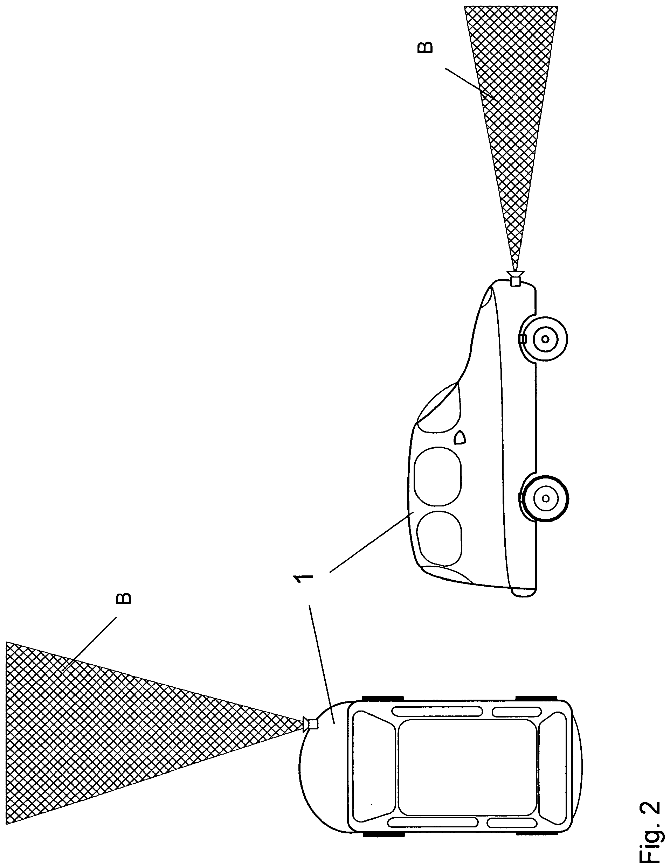

Bei der Erfassung der Umgebung mittels eines Nachtsicht-Systems z.B. basierend auf einer Wärmekamera im Wellenlängenbereich von 8-10 µm wird die Umgebung einschließlich von Hindernissen, wie z.B. Fußgängern und Tieren, auf einem Display im Fahrzeuginnenraum dargestellt. Insbesondere warme Objekte (Fußgänger, Tiere, bestimmte Teile anderer Fahrzeuge) werden sehr deutlich sichtbar. Dennoch ist es für den Fahrer meistens sehr schwer, die am Display dargestellten Objekte der realen, durch die Windschutzscheibe gesehenen Umgebung zuzuordnen und insbesondere das räumliche Verhältnis von für den Fahrer sichtbaren Objekten zu auf dem Display angezeigten Objekten zu erkennen, welche durch das Nachtsicht-System erkannt wurden, jedoch nicht durch das Sehsystem des Fahrers gesehen werden können. Das mittels eines Nachtsicht-Systems erfasste Bild bildet zudem nur einen bestimmten Öffnungswinkel ab, der dem variablen menschlichen Wahrnehmungsfeld nicht immer entsprechen kann. Für den Fahrer ist es somit schwer, einen Überblick darüber zu behalten, welcher Bereich der Straße aktuell auf dem Display im Fahrzeuginnenraum zu sehen ist, um somit die erkannten Hindernisse der realen Umgebung zuzuordnen. Fig. 2 verdeutlicht nochmals die soeben dargelegte Problematik. In dieser Figur ist ein Fahrzeug 1 sowohl in Draufsicht als auch in Seitenansicht gezeigt, wobei der Öffnungswinkel einer Ferninfrarot-Kamera eines Nachtsicht-Systems im vorderen Bereich des Fahrzeugs 1 durch einen entsprechenden schraffierten Bereich B wiedergegeben ist. Man erkennt, dass der Öffnungswinkel sich deutlich von dem Sichtfeld des Fahrers unterscheidet. Der Verbau von einer Ferninfrarotkamera innerhalb der Fahrgastzelle ist allerdings nicht möglich, da die Windschutzscheibe des Fahrzeugs die Wärmestrahlung dämpft.

Wie bereits dargelegt, ist auch eine Darstellung der gesamten Umgebung des Fahrzeugs als ein Videobild oder eine große Anzahl von Symbolen, z.B. auf dem Head-Up-Display, sowohl technisch aufwändig als auch für die Wahrnehmung durch den Menschen von Nachteil. So würde eine denkbare Darstellung aller, durch mehrere Arten der Sensorik erkennbaren Objekte mittels einer oder mehreren Anzeigevorrichtungen zu einer für die menschliche Wahrnehmung überlasteten und schwer zu interpretierenden Darstellung führen.

Aufgabe der Erfindung ist es deshalb, eine Darstellung der Umgebung eines Fahrzeugs für einen Benutzer aus der Perspektive eines Insassen des Fahrzeugs auf einer Anzeigevorrichtung zu schaffen, mit welcher der Benutzer die Objekte in der Umgebung des Fahrzeugs besser erfassen kann.

Diese Aufgabe wird durch das Verfahren gemäß Patentanspruch 1 gelöst. Weiterbildungen der Erfindung sind in den abhängigen Ansprüchen definiert.

Das erfindungsgemäße Verfahren dient zur Darstellung von unterschiedlich gut sichtbaren Objekten aus der Umgebung eines Fahrzeugs für einen Benutzer aus der Perspektive eines Insassen, insbesondere des Fahrers, des Fahrzeugs auf der Anzeige einer Anzeigevorrichtung, wobei die Umgebung des Fahrzeugs zumindest teilweise mit einer oder mehreren Objekterkennungsvorrichtungen automatisch erkannt wurde.

Unter dem Begriff Fahrzeug kann insbesondere ein Kraftfahrzeug, ein Luftfahrzeug, ein Wasserfahrzeug oder Amphibienfahrzeug gemeint sein. Außerdem kann unter einem Fahrzeug im Sinne der Erfindung auch ein autonomes Nutz- oder Erkundungsfahrzeug und/oder ein mobiler Roboter als Fahrzeug verstanden werden. Insbesondere kann das Fahrzeug zumindest teilweise automatische Manöver, z.B. Einparkmanöver, ausführen.

In einer bevorzugten Variante entspricht der Benutzer des Fahrzeugs dem Insassen des Fahrzeugs selbst. In dieser Variante kann somit der nachfolgend verwendete Begriff des Benutzers gleichgesetzt werden mit dem Insassen des Fahrzeugs, wobei der Insasse insbesondere der Fahrer des Fahrzeugs ist. Es besteht gegebenenfalls jedoch auch die Möglichkeit, dass der Benutzer des Fahrzeugs eine Person ist, die das Fahrzeug von außen z.B. drahtlos steuert und/oder Informationen von dem Fahrzeug drahtlos bekommt. In diesem Sinne kann der Benutzer des Fahrzeugs z.B. ein zweiter Fahrer des Fahrzeugs sein, der die Ausführung eines Manövers überwacht. Es ist dabei möglich, dass sich in dem Fahrzeug gegebenenfalls auch überhaupt kein Insasse befindet. In diesem Sinne ist dann die Perspektive des Insassen die Perspektive eines virtuellen Insassen an einer Position im Fahrzeuginnenraum. Falls der Benutzer nicht mit dem Insassen des Fahrzeugs übereinstimmt, kann der Benutzer gegebenenfalls die Position des Insassen aus einer Vielzahl von Positionen auswählen. Die angenommene Position des virtuellen Insassen kann eine durch den Benutzer ausgewählte oder vorgegebene Position sein, welche innerhalb der geometrischen Grenzen des Fahrzeugs und insbesondere innerhalb seines Innenraumes liegt.

Erfindungsgemäß wird für Objekte, welche mit der oder den Objekterkennungsvorrichtungen erkannt wurden, basierend auf einem oder mehreren Kriterien ermittelt, ob das jeweilige Objekt ein erstes Objekt ist, welches für den Insassen als sichtbar eingestuft wird, oder ein zweites Objekt, welches für den Insassen als nicht sichtbar eingestuft wird. Ist der Benutzer nicht der Insasse, erfolgt die Einstufung der Sichtbarkeit basierend auf einen an der entsprechenden Insassenposition angenommenen virtuellen Insassen. Für eine Anzahl von erkannten Objekten umfassend zumindest ein erstes Objekt und zumindest ein zweites Objekt werden die jeweiligen Positionen der Objekte für die Anzeige ermittelt, wobei für die jeweiligen Positionen die geometrischen Verhältnisse zwischen der Anzahl von Objekten im Wesentlichen den realen geometrischen Verhältnissen für die Perspektive des Insassen des Fahrzeugs entsprechen. Insbesondere entsprechen die relativen geometrischen Verhältnisse zwischen zumindest insgesamt drei dargestellten Objekten im Wesentlichen den realen geometrischen Verhältnissen zwischen den entsprechenden Objekten in der Umgebung des Fahrzeugs für die Perspektive des Insassen. Dabei können z.B. die Abstandsverhältnisse zwischen den Positionen der Objekte auf der Darstellung den Abstandsverhältnissen zwischen den betreffenden Objekten auf der Fahrbahn entsprechen, wie der Insasse diese aus seiner Perspektive, insbesondere seiner Augenposition, sehen würde. Die Anzahl der Objekte wird dann an den ermittelten Positionen auf der Anzeige dargestellt.

Eine Objekterkennungsvorrichtung im Sinne der Erfindung kann insbesondere eine an sich bekannte Vorrichtung sein, die zumindest die Erkennung von Merkmalen, insbesondere von Kanten und/oder Konturen eines Objekts und/oder deren Anordnung zueinander erlaubt. Eine Klassifikation des Objekts z.B. zu einer Klasse von Objekten ist nicht unbedingt erforderlich.

Erfindungsgemäß wird einem Benutzer des Fahrzeugs durch die Darstellung zumindest eines ersten, sichtbaren Objekts und zumindest eines zweiten, nicht sichtbaren Objekts die relative Position dieser Objekte in Übereinstimmung mit den realen geometrischen Gegebenheiten für die Perspektive des Insassen vermittelt, so dass der Benutzer des Fahrzeugs eine anschauliche Vorstellung über die tatsächliche Position der nicht sichtbaren Objekte in Bezug auf die sichtbaren Objekte erhält.

Die Erfindung sieht somit eine Ermittlung einer solchen jeweiligen Darstellungsposition der angezeigten ersten bzw. zweiten Objekte vor, die im Wesentlichen dem Verhältnis dieser Positionen aus der Position eines Insassen, insbesondere aus dem Sichtwinkel von diesem, entspricht. Es werden somit Objekte, die aus einer anderen Perspektive, z.B. aus einer Einbauposition der Objekterkennungsvorrichtung im Fahrzeug, erfasst worden sind, in den für die Position des Insassen richtigen geometrischen Verhältnissen auf der Anzeige der Anzeigevorrichtung dargestellt.

In einer bevorzugten Ausgestaltung werden die Positionen der ersten bzw. zweiten Objekte relativ zum Fahrzeug zunächst bestimmt und anschließend durch eine geometrische Transformation in die Darstellung auf der Anzeige der Anzeigevorrichtung transformiert. Als geometrische Verhältnisse werden dabei insbesondere die Proportionen von Distanzen zwischen den angezeigten ersten bzw. zweiten Objekten und/oder die Winkelverhältnisse zwischen diesen Objekten verstanden. Die Erfassung und Erkennung von entsprechenden ersten bzw. zweiten Objekten erfolgt beispielsweise mit unterschiedlichen, am Fahrzeug vorgesehenen Objekterkennungsvorrichtungen. Zum Beispiel können diese Objekterkennungsvorrichtungen als eine Nah-Infrarot- oder Ferninfrarot, z.B. Wärmebildkamera, oder als Vorrichtungen ausgestaltet sein, die auf einer Distanzmessung zu den unterschiedlichen Teilen der Umgebung basieren. Ebenso können die Objekterkennungsvorrichtungen auch Kameras für sichtbare Spektralanteile des Lichts sein.

Unter dem Begriff "Objekt" ist erfindungsgemäß auch ein Teil der Umgebung, z.B. ein Teil der Fahrbahn mit einer Fahrbahnmarkierung bzw. Fahrbahnbegrenzung oder ein Teil von einem Gebäude, zu verstehen. Unter nicht sichtbaren Objekten werden insbesondere solche Objekte verstanden, die beispielsweise aufgrund ihrer geringen Reflektanz im für den Menschen sichtbaren Spektrum und/oder aufgrund der Licht- und/oder Sichtverhältnisse für den Insassen des Fahrzeugs oder z.B. aufgrund der Färbung des Objekts nicht sichtbar sind oder mit einer erhöhten Wahrscheinlichkeit nicht sichtbar sein können. Insbesondere sind nicht sichtbare Objekte solche Objekte, die trotz einer Blickrichtung, die ihre Wahrnehmung an sich erlauben würde, mit hoher Wahrscheinlichkeit übersehen werden.

In einer besonders bevorzugten Ausführungsform der Erfindung erfolgt die Einstufung von Objekten als erste, sichtbare Objekte und zweite, nicht sichtbare Objekte basierend auf einem Sichtbarkeitsmaß. Dabei wird basierend auf dem oder den Kriterien ein Objekt als erstes Objekt eingestuft, wenn in Bezug auf das Objekt eine erste Schwelle eines Sichtbarkeitsmaßes für den Insassen des Fahrzeugs überschritten ist, und ein Objekt wird als ein zweites Objekt eingestuft, wenn in Bezug auf das Objekt eine zweite Schwelle eines Sichtbarkeitsmaßes für den Insassen des Fahrzeugs unterschritten ist, wobei die zweite Schwelle der ersten Schwelle entspricht oder niedriger als die erste Schwelle ist. Durch entsprechende Wahl der ersten und zweiten Schwellen in einem Abstand voneinander wird insbesondere der Vorteil erreicht, dass die generierte Anzeige nach wie vor eine gute Orientierung für den Insassen bietet, aber nicht mit unnötig dargestellten Objekten oder Teilen der Umgebung belastet ist.

Das Sichtbarkeitsmaß eines Objekts kann insbesondere abhängig von den spektralen Eigenschaften des von ihm abgestrahlten Lichts ermittelt werden. So können z.B. Objekte, die eine eindeutig erkennbare Abstrahlung im Ferninfrarot-Spektrum haben, keine hinreichende Abstrahlung im sichtbaren Spektrum haben und umgekehrt.

Die Einteilung von erkannten Objekten in sichtbare und nicht sichtbare Objekte kann insbesondere basierend auf der Ermittlung eines Sichtbarkeitsmaßes erfolgen, wie es in der früheren deutschen Patentanmeldung 10 2008 051 593.0 des Anmelders offenbart ist. Der gesamte Offenbarungsgehalt dieser Patentanmeldung wird durch Verweis zum Inhalt der vorliegenden Anmeldung gemacht. Die Prinzipien des in dieser früheren Patentanmeldung beschriebenen Verfahrens können auch in der hier beschriebenen Erfindung zur Identifikation eines sichtbaren bzw. nicht sichtbaren Objekts eingesetzt werden. Im Unterschied zu der früheren Patentanmeldung wird in der hier beschriebenen Erfindung die Sichtbarkeit der erkannten Objekte jedoch aus der Position des Insassen, insbesondere des Fahrers, des Fahrzeugs ermittelt. Demgegenüber wird in der früheren Patentanmeldung die Sichtbarkeit des Fahrzeugs selbst aus verschiedenen Raumwinkeln bzw. Beobachtungspositionen bestimmt.

Wie bereits erwähnt, wird zur Unterscheidung zwischen "sichtbar" und "nicht sichtbar" für das ermittelte Sichtbarkeitsmaß insbesondere eine geeignete Schwelle festgelegt, wobei bei Überschreiten der Schwelle das Objekt für den Menschen als sichtbar und beim Unterschreiten der Schwelle das Objekt für den Menschen als nicht sichtbar eingestuft wird. Das Sichtbarkeitsmaß kann dabei beispielsweise in der Form der Wahrscheinlichkeit ausgedrückt werden, mit der das erkannte Objekt insbesondere durch ein statistisches, menschliches oder tierisches Sehsystem gesehen bzw. übersehen wird. Zur Ermittlung des Sichtbarkeitsmaßes kann in Analogie zu der oben genannten früheren Patentanmeldung eine erste Lichtverteilung umfassend eine Helligkeitsverteilung und/oder Spektralverteilung von Leuchtflächen der jeweiligen erkannten Objekte und gegebenenfalls in der Umgebung der erkannten Objekte ermittelt werden. Diese Helligkeits- und/oder Spektralverteilung wird dabei insbesondere mit entsprechenden Sensierungsmitteln im Fahrzeug bestimmt, wobei diese Sensierungsmittel auch Teil des oder der erfindungsgemäß verwendeten Objekterkennungsvorrichtungen sein können. Zur Bestimmung eines geeigneten Sichtbarkeitsmaßes für die Position des Insassen bzw. Fahrers des Fahrzeugs wird die erste Lichtverteilung vorzugsweise in die Perspektive der Position des Insassen bzw. Fahrers des Fahrzeugs transformiert, wodurch eine zweite Lichtverteilung erhalten wird. Basierend auf dieser zweiten Lichtverteilung kann dann ein Sichtbarkeitsmaß für das jeweilige Objekt ermittelt werden.

Unter dem obigen Begriff einer Leuchtfläche kann sowohl eine selbstleuchtende Fläche als auch eine reflektierende, lichtbrechende oder fluoreszierende Fläche verstanden werden. Eine Leuchtfläche kann auch eine Fläche sein, die sowohl selbst leuchtet als auch das Licht reflektieren oder brechen kann, wie z.B. die Windschutzscheibe eines Fahrzeugs. Eine Leuchtfläche kann auch eine Fahrzeugleuchte sein. Die Unterteilung in Leuchtflächen kann z.B. nach geometrischen Aspekten gemacht werden. So können z.B. Objekte, die sich nahe voneinander befinden, oder deren Teile eine Leuchtfläche bilden, während ein weiter beabstandet angeordnetes Objekt oder ein Teil davon als andere Leuchtfläche eingestuft wird. Es ist dabei besonders vorteilhaft, eine Punktmenge der ersten Lichtverteilung mit ähnlichen Eigenschaften als eine Leuchtfläche aufzufassen und/oder weiterzuverarbeiten. Die Leuchtflächen können gegebenenfalls auch sehr kleine infinitesimale Flächen sein. Die Leuchtflächen können beliebige Formen aufweisen, insbesondere können sie auch gekrümmt sein.

Durch die erste Lichtverteilung wird somit eine räumliche Verteilung der Leuchtflächen beschrieben. Die Lichtverteilung kann als Winkel, Raumwinkel oder Winkelverhältnis zwischen den Leuchtflächen ermittelt und/oder weiterverarbeitet werden.

Das oben genannte Sichtbarkeitsmaß repräsentiert insbesondere die Erkennbarkeit des Objekts und/oder seiner äußeren Grenzen und/oder der räumlichen Ausrichtung des Objekts für das visuelle System des Menschen. Des Weiteren kann das Sichtbarkeitsmaß auch die Unterscheidbarkeit des jeweiligen Objekts von anderen Objekten oder sonstigen Objekten berücksichtigen. Insbesondere wird ein Objekt als sichtbar angenommen, wenn ein genügend großer Anteil seiner Teile, die ebenfalls Objekte sein können, insbesondere von Kanten und/oder Strukturen, sichtbar sind und/oder wenn die Teile des Objekts an seinen räumlichen Grenzen sichtbar sind. Ein Objekt wird insbesondere dann als insgesamt unsichtbar angenommen, wenn diese Kriterien nicht erfüllt sind.

Das ermittelte Sichtbarkeitsmaß ist von verschiedenen Größen abhängig, insbesondere von aktuellen Kontrastverhältnissen sowie von der relativen Bewegung des jeweiligen Objekts zu üblichen Lichtquellen bzw. anderen Objekten. So steigt z.B. im Allgemeinen die Wahrscheinlichkeit, dass ein Objekt vom Insassen gesehen wird, wenn sich das Objekt - aus der Position des Insassen gesehen - relativ zum Hintergrund bewegt.

In einer bevorzugten Variante des Verfahrens zur Ermittlung der Sichtbarkeit liegt die ermittelte erste Lichtverteilung in einer solchen Form vor, in der eine Winkelabhängigkeit der Parameter der Lichtverteilung enthalten ist. Dies kann z.B. in Form einer durch Stützpunkte beschriebenen Funktion der Abhängigkeit der einzelnen Parameter der Lichtverteilung von der Richtung und gegebenenfalls auch vom Abstand beschrieben werden. Vorzugsweise liegt die erste Lichtverteilung in einem vektorbasierten Format vor, wobei ein Vektor in diesem Format die Richtung anzeigt, in der sich die entsprechende Leuchtfläche befindet, und als Attribut die zugehörigen Lichtparameter und/oder entsprechende Abstrahlcharakteristika der jeweiligen Leuchtfläche enthält.

Vorzugsweise wird die zur Ermittlung des Sichtbarkeitsmaßes durchgeführte Transformation der ersten Lichtverteilung basierend auf einer Koordinatentransformation durchgeführt, welche die Position und/oder die Strahlenwinkel der Leuchtflächen in die Perspektive des Insassen des Fahrzeugs transformiert. Diese Transformation der ersten Lichtverteilung kann dabei beispielsweise basierend auf einer Simulation der Lichtausbreitung im System aus dem jeweiligen erkannten Objekt und zumindest Teilen der Umgebung des Objekts durchgeführt werden. Es wird somit rechnergestützt aus der ermittelten ersten Lichtverteilung ein Modell der Lichtflächen mit ihren Abstrahlcharakteristika räumlich erstellt, und dieses Modell kann dann wiederum rechnergestützt mit bekannten Transformationen in die Perspektive des Insassen des Fahrzeugs gewandelt werden.

In einer bevorzugten Ausgestaltung des Verfahrens zur Ermittlung des Sichtbarkeitsmaßes werden ein oder mehrere Kontrastverhältnisse zwischen Leuchtflächen, insbesondere zwischen dem jeweiligen erkannten Objekt und der Umgebung des erkannten Objekts, innerhalb der zweiten Lichtverteilung ermittelt, wobei das Sichtbarkeitsmaß von dem oder den Kontrastverhältnissen abhängt. Unter dem Kontrastverhältnis ist dabei ein Maß für den Unterschied zwischen den Helligkeits- und/oder Spektralverteilungen von verschiedenen Leuchtflächen und/oder innerhalb einer Leuchtfläche zu verstehen. Der Unterschied kann z.B. auch in Form eines Gradienten ausgedrückt werden.

Das Kontrastverhältnis kann gegebenenfalls auch über eine Funktion ermittelt werden, welche die jeweiligen räumlichen Verläufe der Helligkeit bzw. spektralen Verteilung der einzelnen Leuchtflächen beschreibt, gegebenenfalls abhängig vom Raumwinkel der Position des Insassen des Fahrzeugs bzw. der Distanz zur Position des Insassen des Fahrzeugs. Das Kontrastverhältnis kann somit auch den Unterschied zwischen den gemittelten Helligkeiten bzw. gemittelten spektralen Verteilungen von zwei Leuchtflächen repräsentieren, wobei die Helligkeit bzw. spektrale Verteilung über die Ausdehnung der jeweiligen Leuchtfläche gemittelt ist. Als Kontrastverhältnis wird insbesondere ein Kontrastverhältnis zwischen dem jeweiligen erkannten Objekt und der Umgebung des Objekts ermittelt. Insbesondere kann das Kontrastverhältnis zwischen den Leuchtflächen des jeweiligen Objekts, welche die geometrischen Grenzen bzw. die Abmessungen des Objekts kennzeichnen, und den Leuchtflächen der Umgebung, insbesondere die nicht durch das jeweilige Objekt verdeckten Leuchtflächen, bestimmt werden. Besonders vorteilhaft ist die Ermittlung des Kontrastverhältnisses zwischen den Leuchtflächen, die in Bezug auf die Position des Insassen des Fahrzeugs die geometrischen Grenzen des jeweiligen Objekts bilden, und den Leuchtflächen aus der Umgebung, die in einem im Wesentlichen benachbarten Raumwinkel zu den geometrischen Grenzen des erkannten Objekts sichtbar sind. Das Sichtbarkeitsmaß kann ferner auch aus lokalen Kontrastverhältnissen von Teilbereichen innerhalb der zweiten Lichtverteilung bestimmt werden.

Erfindungsgemäß erfolgt die Unterscheidung zwischen den ersten, sichtbaren und zweiten, nicht sichtbaren Objekten vorzugsweise mit Hilfe der oder den Objekterkennungsvorrichtungen, welche im erfindungsgemäßen Verfahren zur Erfassung bzw. Erkennung von Objekten in der Umgebung des Fahrzeugs eingesetzt werden. Somit kann die Erfindung besonders kostengünstig mittels ohnehin vorhandener Sensorik oder Rechenressoursen realisiert werden. Z.B. kann die automatische Unterscheidung zwischen den ersten und zweiten Objekten und/oder die Auswahl der darzustellenden ersten und zweiten Objekte zusammen mit weiteren Verfahren, z.B. zur Erkennung von Objekten, in der Recheneinheit eines Objekterkennungssystems, insbesondere anhand der in diesem System bereits vorliegenden, im Rahmen des Objekterkennungsverfahren ermittelten Merkmalen von Objekten realisiert werden.

In einer bevorzugten Ausführungsform des erfindungsgemäßen Verfahrens erfolgt die Unterscheidung zwischen den ersten, sichtbaren und zweiten, nicht sichtbaren Objekten mit Hilfe von mindestens zwei Arten von Sensoren und/oder Objekterkennungsvorrichtungen. Beispielsweise kann die Umgebung des Fahrzeugs mit Hilfe eines Nah- oder Ferninfrarotbildsensors zur Erfassung der Objekte, die für den Insassen z.B. bei Nacht nicht sichtbar sein können, erfasst werden. Die Objekte, die für den Insassen sichtbar sein können, können mit Hilfe eines Bildsensors im sichtbaren Spektrum oder einer entsprechenden Kamera erfasst werden. Dabei kann für die Objekte, die durch einen solchen Bildsensor erfasst werden, eine Überprüfung des Sichtbarkeitsmaßes nach oben genannten Prinzipien erfolgen. Durch eine automatische Gegenüberstellung erfasster Objekte, die mittels mindestens zweier Arten von Sensoren erkannt worden sind, kann ermittelt werden, welche in der Umgebung des Fahrzeugs befindlichen Objekte, bei gegebenen Licht- und Sichtverhältnissen für den Fahrer sichtbar oder nicht sichtbar sind. Als eine Art von Sensoren können vorteilhafterweise Laserscanner, Laserabstandssensoren oder TOF-Sensoren eingesetzt werden. Dabei ist es besonders vorteilhaft, dass diese Sensoren nicht auf die Strahlung oder Reflektion des umgebenden Lichts angewiesen sind. Zwei Arten von Sensoren können z.B. auch zusammen in einem Sensorgehäuse oder auf einem Halbleiterkristall, z.B. als Pixel mit unterschiedlicher spektraler Empfindlichkeit, z.B. für das sichtbare Spektrum und das Ferninfrarot-Spektrum, vorgesehen sein.

In einer weiteren Ausführungsform des erfindungsgemäßen Verfahrens, bei welcher der Benutzer dem Insassen entspricht, wird die Blickrichtung des Insassen des Fahrzeugs erfasst, wobei bei der Definition von dem oder den Kriterien solche Objekte als zweite Objekte eingestuft werden, die aufgrund der erfassten Blickrichtung, insbesondere der Historie der Blickrichtung, mit hoher Wahrscheinlichkeit durch den Insassen übersehen werden können. Die Blickrichtung des Insassen kann dabei durch beliebige, aus dem Stand der Technik bekannte Eye-Tracking-Verfahren erfasst werden, die den Verlauf der Augenbewegung des Menschen verfolgen. Daraus können Rückschlüsse auf die für den Insassen mehr oder minder gut sichtbaren Objekte gezogen werden. Neben der Auswertung der grundsätzlichen Blickrichtung beinhaltet die Erfindung auch die Berücksichtigung von sog. sakkadischen Augenbewegungen, welche dem Fachmann hinlänglich bekannt sind. Diese meist sehr kleinen und schnellen Augenbewegungen, die innerhalb einer Blickrichtung stattfinden, spielen bei der tatsächlichen Sichtbarkeit bzw. Nichtsichtbarkeit von Objekten für den Menschen eine Rolle. Die Berücksichtigung der Blickrichtung und der sakkadischen Augenbewegungen beinhaltet auch die Berücksichtigung der Historie dieser Parameter. Somit kann z.B. festgestellt werden, dass ein Objekt ein zweites Objekt ist, wenn der Insasse auf dieses Objekt unmittelbar nach der Beobachtung eines anderen Raumteils mit einer deutlich unterschiedlichen Ausleuchtung und/oder Entfernung geschaut hat und die für eine Adaption oder Akkomodation des menschlichen visuellen Systems erforderliche Zeit noch nicht verstrichen ist.

In einer weiteren Ausgestaltung des erfindungsgemäßen Verfahrens liegt die von dem Benutzer des Fahrzeugs wahrnehmbare Position der Anzeige der Anzeigevorrichtung außerhalb des Fahrzeuginnenraums. Die Darstellung kann dabei z.B. mittels eines Head-Up-Displays oder einer Weiterbildung eines solchen ausgestaltet sein. Alternativ kann die Anzeige z.B. mittels einer Projektion, insbesondere einer holografischen Projektion, innerhalb oder außerhalb des Fahrzeuginnenraums, oder eines 3D-Displays erfolgen.

In einer weiteren Variante des erfindungsgemäßen Verfahrens werden die auf der Anzeige dargestellten ersten und zweiten Objekte zumindest teilweise symbolhaft wiedergegeben. Insbesondere kann die zumindest teilweise symbolische Darstellung derart realisiert werden, dass unterschiedliche Teile des mit einer Aufnahmevorrichtung erfassten Bildes unterschiedlichen Bildverarbeitungsschritten unterzogen werden. Somit können insbesondere die Teile des Bildes, die sichtbare und/oder nicht sichtbare Objekte oder deren Teile, z.B. Kanten oder Randbereiche, enthalten, unterschiedlichen Bildverarbeitungsoperatoren unterzogen werden. Eine symbolische Darstellung kann auch durch eine eingeblendete oder dem Bild überblendete Graphik und/oder ein entsprechendes Symbol erzeugt werden.

In einer weiteren Ausgestaltung des erfindungsgemäßen Verfahrens werden mit zumindest einer Objekterkennungsvorrichtung erkannte Fahrbahnbegrenzungen und/oder Fahrbahnmarkierungen bis zu einem vorbestimmten Abstand vom Fahrzeug als erste Objekte eingestuft. Vorteilhafterweise können dabei die Fahrbahnbegrenzungen bzw. Fahrbahnmarkierungen in einem definierten Abstand zum Fahrzeug je nach vorherrschenden Bedingungen (Tag, Nacht, Dämmerung, Regen, Nebel) als sichtbar angenommen werden und in der erfindungsgemäßen Anzeige wiedergegeben werden. Auf diese Weise wird besonders einfach eine Einstufung der Fahrbahnbegrenzungen bzw. Fahrbahnmarkierungen als sichtbare bzw. nicht sichtbare Objekte vorgenommen.

In einer weiteren Ausführungsform des erfindungsgemäßen Verfahrens erfolgt die Einstufung der mit der oder den Objekterkennungsvorrichtungen erkannten Objekte als erste oder zweite Objekte in Abhängigkeit von mit zumindest einem Erfassungsmittel erfassten Licht- und/oder Sichtbarkeitsverhältnissen und/oder deren Historie, insbesondere unter Berücksichtigung psychooptischer Eigenschaften des menschlichen Sehsystems. Bei der Erfassung der Licht- und/oder Sichtbarkeitsverhältnisse werden insbesondere psychooptische Kontrastverhältnisse berücksichtigt. Psychooptische Kontrastverhältnisse und deren Einflussgrößen sind dem Fachmann an sich bekannt. Ein psychooptisches Kontrastverhältnis beruht auf den bekannten spezifischen Eigenschaften des Sehsystems des Menschen, d.h. auf der Fähigkeit dieses Sehsystems, Unterschiede zwischen unterschiedlich leuchtenden Raumteilen, Farbverläufen, Intensitätsverläufen, Texturen sowie Kanten eines Objekts unter anderem anhand der räumlichen und zeitlichen Gradienten unterschiedlicher Lichtparameter wahrzunehmen. Vorzugsweise beinhalten die psychooptischen Kontrastverhältnisse zusätzlich die Adaptionseigenschaften des Sehsystems des Menschen.

Die Ermittlung des Sichtbarkeitsmaßes und/oder von Größen zur Bestimmung der Sichtbarkeit von Objekten kann erfindungsgemäß mittels einer Simulation des visuellen Systems des Insassen des Fahrzeugs erfolgen. Dabei kann die Umgebung und/oder Historie der Lichtverhältnisse berücksichtigt werden, denen der Insasse des Fahrzeugs ausgesetzt ist und/oder in naher Vergangenheit ausgesetzt war. In einer bevorzugten Variante wird das psychooptische Kontrastverhältnis basierend auf einer Simulation des visuellen Systems eines z.B. statistischen Fahrers des Fahrzeugs ermittelt. Dabei können eine Reihe von Einflussgrößen oder Ereignissen, die auf den Fahrer wirken, berücksichtigt werden, z.B. der Einfluss einer Blendung durch einen Verkehrsteilnehmer, der Einfluss des Innenlichts bei Nacht, die reflektierende Wirkung der Windschutzscheibe vor seinen Augen und dergleichen.

Vorteilhafterweise werden aus der gesamten Anzahl erster Objekte eine Teilmenge erster Objekte ausgewählt, die bzw. deren Position in der Anzeigevorrichtung dargestellt werden. Bevorzugt wird eine solche Teilmenge erster Objekte ausgewählt, die dem Benutzer die Information über die Position des mindestens einen zweiten Objekts vermittelt. In einer Ausgestaltung des erfindungsgemäßen Verfahrens hängt die Auswahl von darzustellenden ersten Objekten davon ab, ob zumindest ein zweites Objekt in demselben Bereich des Umfeldes zur Anzeige ausgewählt wurde. Insbesondere werden nur solche erste, sichtbare Objekte auf der Anzeige dargestellt, welche die auf der Anzeige dargestellten zweiten, nicht sichtbaren Objekte zumindest von zwei oder drei räumlichen Seiten umgeben. Damit wird ein Rahmen aus den ersten Objekten gebildet, welcher die in der Darstellung abgebildeten zweiten Objekte umgibt. Somit erhält der Benutzer des Fahrzeugs eine zusätzliche Unterstützung zur Wahrnehmung der Position der zweiten, nicht sichtbaren Objekte, und zwar ohne eine unnötige ständige Darstellung von vielen, für den Fahrer ohnehin sichtbaren Objekte. Dabei führt z.B. das Erscheinen eines nicht sichtbaren Objekts in der Umgebung des Fahrzeugs und in der erfindungsgemäßen Darstellung dazu, dass einige an sich sichtbare, zuvor nicht in der Darstellung abgebildete Objekte nunmehr zusammen mit dem nicht sichtbaren Objekt dargestellt werden.

In einer weiteren Ausgestaltung der Erfindung werden an sich sichtbare Teile eines Objekts, das an einer ermittelten Position auf der Anzeige dargestellt wird, nicht dargestellt und/oder in der Darstellung auf der Anzeige unterdrückt, wenn das Sichtbarkeitsmaß des Objekts die zweite Schwelle unterschreitet. Auf diese Weise werden von entsprechenden zweiten Objekten zumindest solche Teile nicht wiedergegeben, welche an sich für den Insassen des Fahrzeugs sichtbar sind.

In einer weiteren Ausgestaltung des erfindungsgemäßen Verfahrens werden auf der Anzeige eine virtuelle Fahrbahnebene umfassend die mit zumindest einer Objekterkennungsvorrichtung erkannten Fahrbahnbegrenzungen und/oder Fahrbahnmarkierungen generiert. Es wird somit eine Darstellung generiert, bei der durch den Fahrer sehr schnell die Lage von erkannten Objekten in Bezug auf die Fahrbahn erfasst werden kann, da die Objekte an den richtigen Positionen relativ zur virtuellen Fahrbahnebene wiedergegeben werden. Durch die Wiedergabe der virtuellen Fahrbahnebene, welche die erkannten Fahrbahnmarkierungen und/oder Fahrbahnbegrenzungen umfasst, wird darüber hinaus eine sehr gute Orientierungshilfe für den Fahrer betreffend die angezeigten erkannten Objekte gegeben. Insbesondere kann die Position eines Objekts relativ zu den Fahrbahnmarkierungen bzw. Fahrbahnbegrenzungen auf einem relativ kleinen Bereich der Anzeige der Anzeigevorrichtung, wie z.B. einem Head-Up-Display, dargestellt werden, wobei der Fahrer dennoch genau abschätzen kann, an welchen Stellen der Fahrbahn sich z.B. ein Hindernis befindet. Eine aufwändige Ausdehnung des Head-Up-Display auf große Teile der Windschutzscheibe oder die Verwendung eines sog. kontaktanalogen Head-Up-Displays ist somit nicht notwendig. Insbesondere erkennt der Fahrer sehr gut, sowohl auf welcher Spur als auch an welcher Position innerhalb der Spur sich ein entsprechendes sichtbares bzw. nicht sichtbares Objekt befindet.

In einer weiteren Ausführungsform des erfindungsgemäßen Verfahrens erfolgt eine Auswahl der auf der Anzeige angezeigten ersten und zweiten Objekte in Abhängigkeit von den odometrischen Daten des Fahrzeugs und/oder einer automatisch ausgewerteten Verkehrssituation. Beispielsweise kann die Länge eines auf der Anzeige dargestellten sichtbaren Fahrbahnabschnitts bzw. die Breite des Fahrbahnabschnitts, wie z.B. die Anzahl der dargestellten Spuren, von den odometrischen Daten des Fahrzeugs und/oder von der automatisch erkannten Verkehrssituation abhängen.

Somit wird je nach automatisch ausgewerteter Verkehrssituation (z.B. Parken und Rangieren, 30er-Zone, Schnellstraßen) ein jeweils relevanter Bereich auf der Anzeige dargestellt. Der darzustellende Bereich kann insbesondere von der abgeschätzten Position bzw. Reichweite des Fahrzeugs in den nächsten Sekunden abhängen. Es fließt hierbei die Überlegung ein, dass bestimmte, z.B. an das Fahrzeug unmittelbar anliegende, Bereiche der Fahrbahn in vielen Verkehrssituationen nicht relevant sind. Im Gegensatz dazu sind weiter entfernt gelegene Bereiche umso relevanter. Bei einer Rangiergeschwindigkeit ist der unmittelbar an das Fahrzeug anschließende Fahrbahnabschnitt mit einer Länge von einigen Metern relevant, während bei einer Autobahngeschwindigkeit die Darstellung erst in 20 Metern beginnt und die nächsten 30 Meter umfasst. Der auf der Anzeige dargestellte Fahrbahnabschnitt kann auch in Abhängigkeit von den Daten eines Navigationssystems, z.B. abhängig vom weiteren Straßenverlauf und/oder dem eingestellten Ziel, ausgewählt werden.

In einer weiteren Ausführungsform des erfindungsgemäßen Verfahrens werden die jeweiligen Positionen der ersten und zweiten Objekte für die Anzeige mit Hilfe einer Tiefeninformation betreffend die reale Position der ersten und zweiten Objekte relativ zum Fahrzeug bestimmt, wobei die Tiefeninformation mit Hilfe zumindest einer Objekterkennungsvorrichtung ermittelt wird. Auf diese Weise ergibt sich ein einfacher trigonometrischer Zusammenhang, der ressourcesparend ermittelt werden kann. Die Entfernung zu dem entsprechenden Objekt kann dabei mittels an sich bekannter Verfahren bestimmt werden. Besonders vorteilhaft ist die Umsetzung des Verfahrens mittels des eingangs erwähnten MIDIAS-Kamerasystems, wobei die Tiefeninformation des TOF-Sensors bezogen auf den betreffenden Raumwinkel zur Ermittlung der Objektentfernung benutzt wird.

In einer weiteren Ausgestaltung der Erfindung weist die Anzeige zur Erzeugung einer Tiefenwirkung mehrere Anzeigeebenen mit unterschiedlichen, durch den Benutzer wahrgenommenen Positionen zu einer vorbestimmten Blickrichtung des Benutzers, insbesondere des Fahrers, des Fahrzeugs auf. Vorzugsweise können dabei Teile der Darstellung, insbesondere unterschiedliche Objekte, auf unterschiedlichen Anzeigeebenen dargestellt werden, insbesondere auf solchen Anzeigeebenen, die als unterschiedlich weit vom Benutzer liegend und/oder als unterschiedlich geneigt wahrgenommen werden. Folglich ist das Vorhandensein einer vollständig 3D-fähigen Anzeigevorrichtung nicht notwendig, um dem Benutzer z.B. intuitiv und anschaulich unterschiedliche Neigungen einer virtuellen Fahrbahnebene zum Horizont darzustellen oder zu zeigen, das ein dargestelltes Objekt sich weiter vom Fahrzeug befindet als ein anderes dargestelltes Objekt. Somit kann die Erfindung, z.B. mittels eines Head-Up-Displays oder einer anderen Anzeigevorrichtung, welche z.B. nur 3 bis 12 unterschiedliche Darstellungstiefen erlaubt, realisiert werden.

In einer weiteren Variante des erfindungsgemäßen Verfahrens erfolgt eine Auswahl der angezeigten ersten und/oder zweiten Objekte basierend auf einem Kriterium, bei dem Objekte mit erhöhtem Kollisionsrisiko mit dem Fahrzeug als anzuzeigende Objekte bevorzugt werden. Somit können die in der Darstellung darzustellenden Objekte, insbesondere die nicht sichtbaren Objekte, in Abhängigkeit von ihrer Verkehrsrelevanz, insbesondere von der Kollisionswahrscheinlichkeit mit dem Fahrzeug, ausgewählt werden. Die Kollisionswahrscheinlichkeit kann dabei mittels an sich bekannter Verfahren zur Ermittlung möglicher Kollisionen ermittelt werden.

In einer weiteren Ausgestaltung des erfindungsgemäßen Verfahrens werden die auf der Anzeige dargestellten ersten und zweiten Objekte mit Hilfe weiterer graphischer Elemente verbunden. Diese künstlich erzeugten graphischen Elemente dienen insbesondere dazu, den räumlichen Zusammenhang zwischen sichtbaren und nicht sichtbaren Objekten darzustellen. Die graphischen Elemente können insbesondere als Hilfslinien, Rastern, Punkten, Pfeilen, markierten Flächen oder Abstandsanzeigen ausgestaltet sein.

Vorteilhafterweise kann zusätzlich zu der Darstellung eines Objekts, insbesondere eines zweites Objekts, die z.B. als Symbol oder als ein hervorgehobenes Objekt ausgestaltet ist, eine vergrößerte Darstellung dieses Objekts, z.B. in einem anderen Bereich der Anzeigevorrichtung oder auf einer anderen Anzeigevorrichtung, dargestellt werden. Somit kann sowohl eine relativ große Ansicht des Objekts als auch die Position des Objekts zur gleichen Zeit auf einer insgesamt verhältnismäßig kleinen Anzeigefläche bzw. innerhalb eines kleinen Sichtwinkels dargestellt werden. In einer bevorzugten Ausgestaltung des Verfahrens kann die vergrößerte Objektansicht in einer anderen Perspektive als die in einer Ausführungsform der Erfindung dargestellte virtuelle Fahrbahnebene, z.B. in der untransformierten Perspektive und/oder mit verändertem Aussehen, z.B. mit betonten Kanten und Konturen, dargestellt werden.

Vorteilhafterweise kann das Verfahren derart ausgestaltet ein, dass zusätzliche grafische Elemente angezeigt werden, die den Bezug der vergrößerten Darstellung zu der Position des Objekts auf der Anzeige anzeigen. Somit wird dem Benutzer die Zugehörigkeit der vergrößerten Darstellung des Objekts mit der Objektdarstellung bzw. der Darstellung der Position des Objekts vermittelt. Die grafischen Elemente können die Darstellung des Objekts, die z.B. als symbolische Darstellung ausgestaltet ist, mit der vergrößerten Darstellung verbinden oder den Bezug zwischen den beiden Darstellungen durch die Richtung einer Linie, die im Wesentlichen von einer Darstellung zu der anderen Darstellung ausgerichtet ist, anzeigen.

Vorteilhafterweise ist der auf der Anzeigevorrichtung dargestellte Teil der Umgebung des Fahrzeugs vom Vorhandensein von mindestens einem zweiten Objekt, insbesondere von mindestens einem verkehrsrelevanten zweiten Objekt, abhängig. Somit kann der Großteil der verfügbaren Fläche der Anzeige zur Darstellung eines Teils der Umgebung genutzt werden, in der sich ein verkehrsrelevantes, für den Insassen nicht bzw. nicht unmittelbar sichtbares Objekt erkannt wird. Dies kann sowohl zu einer besseren Konzentration des Benutzers auf das zweite Objekt und seiner Position als auch zu einer verbesserten Nutzung der Anzeigefläche beitragen.

In einer Ausführungsform der Erfindung ist die Anzeigevorrichtung Teil eines externen Geräts außerhalb des Fahrzeugs, z.B. eines Mobiltelefons, wobei Informationen von dem Fahrzeug an das externe Gerät übermittelt werden, insbesondere drahtlos übermittelt werden. Vorzugsweise kann der Benutzer dabei die Position eines Insassen, aus dessen Perspektive die Umgebung des Fahrzeugs darzustellen ist, über das externe Gerät aus mindestens zwei Positionen auswählen.

Neben dem oben beschriebenen Verfahren betrifft die Erfindung ferner eine Anzeigevorrichtung zur Darstellung von unterschiedlich gut sichtbaren Objekten aus der Umgebung eines Fahrzeugs für einen Benutzer aus der Perspektive eines Insassen, insbesondere des Fahrers, des Fahrzeugs auf der Anzeige einer Anzeigevorrichtung, wobei die Umgebung des Fahrzeugs zumindest teilweise mit einer oder mehreren Objekterkennungsvorrichtungen automatisch erkannt wurde. Die Anzeigevorrichtung umfasst dabei ein Mittel, mit dem für Objekte, welche mit der oder den Objekterkennungsvorrichtungen erkannt wurden, basierend auf einem oder mehreren Kriterien ermittelbar ist, ob das jeweilige Objekt ein erstes Objekt ist, welches für den Insassen als sichtbar eingestuft wird, oder ein zweites Objekt, welches für den Insassen als nicht sichtbar eingestuft wird. Die Anzeigevorrichtung umfasst ferner ein Mittel, mit dem für eine Anzahl von erkannten Objekten umfassend zumindest ein erstes Objekt und zumindest ein zweites Objekt jeweilige Positionen der Objekte für die Anzeige ermittelbar sind, bei denen die geometrischen Verhältnisse zwischen der Anzahl von Objekten im Wesentlichen den realen geometrischen Verhältnissen für die Perspektive des Insassen des Fahrzeugs entsprechen. Die Anzeigevorrichtung ist dabei derart ausgestaltet, dass die Anzahl der Objekte an den ermittelten Positionen auf der Anzeige dargestellt werden. Mit dieser Anzeigevorrichtung ist vorzugsweise jede Variante des oben beschriebenen erfindungsgemäßen Verfahrens durchführbar. Die Anzeigevorrichtung kann in einem oder mehreren Steuergeräten oder -einheiten des Fahrzeugs verbaut oder integriert werden.

Neben der oben beschriebenen Anzeigevorrichtung betrifft die Erfindung ferner ein Fahrzeug, welches eine solche Anzeigevorrichtung umfasst.

Ausführungsbeispiele der Erfindung werden nachfolgend anhand der beigefügten Figuren detailliert beschrieben.

Es zeigen:
- Fig. 1: eine schematische Darstellung des aus dem Stand der Technik bekannten Kamerasystems nach MIDIAS;
- Fig. 2: eine schematische Darstellung eines Fahrzeugs mit darin verbauter objekterkennender Kamera;
- Fig. 3: eine schematische Darstellung eines Ausführungsbeispiels des erfindungsgemäßen Verfahrens;
- Fig. 4: ein Beispiel einer mittels des erfindungsgemäßen Verfahrens generierten Darstellung der Fahrzeugumgebung; und
- Fig. 5: ein Beispiel einer weiteren, mittels des erfindungsgemäßen Verfahrens generierten Darstellung der Fahrzeugumgebung.

Fig. 1 und 2 wurden bereits weiter oben bei der Darlegung der der Erfindung zu Grunde liegenden Problemstellung detailliert erläutert, so dass auf eine nochmalige Beschreibung dieser Figuren verzichtet wird.

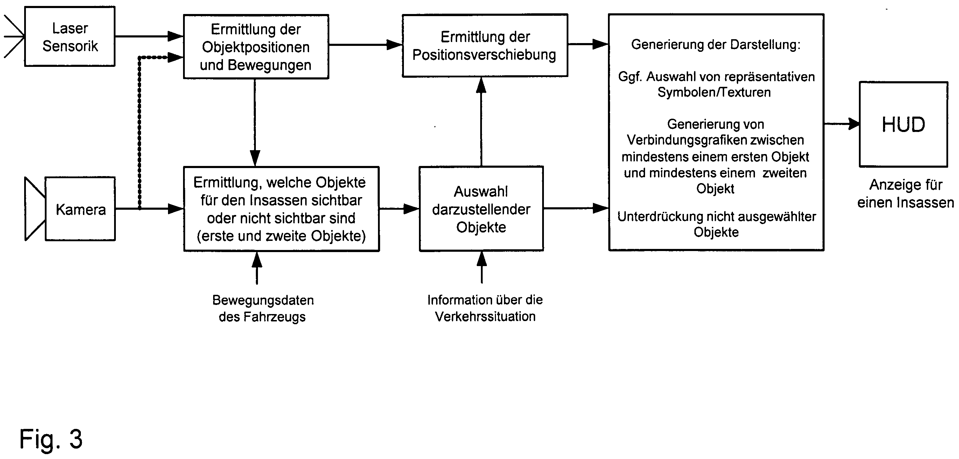

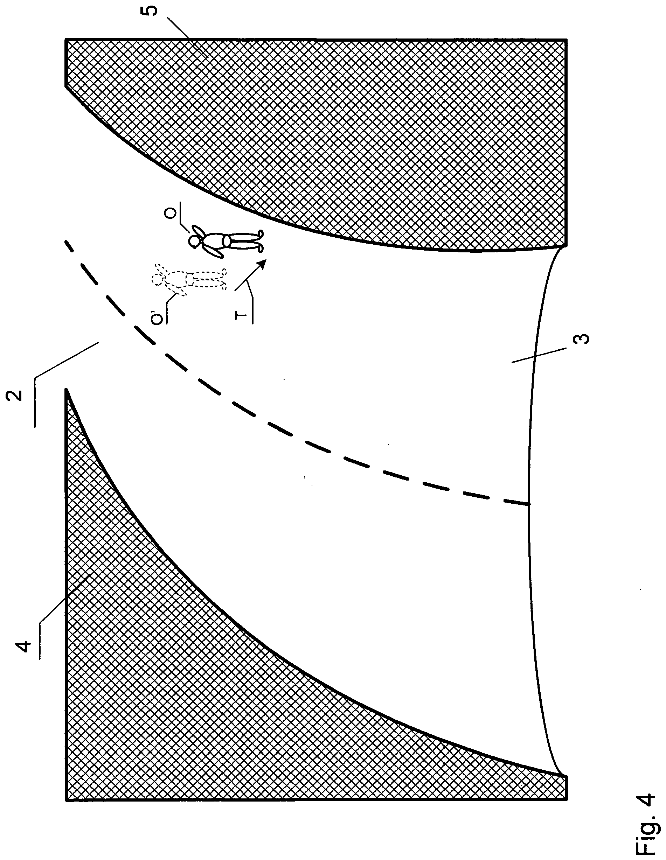

Fig. 3 zeigt in schematischer Darstellung ein Beispiel einer Realisierung der Erfindung. Dabei wird die Fahrzeugumgebung sowohl mit einer Laser-Sensorik als auch mit einer Kamera erfasst. Aus den Daten der Laser-Sensorik und der Kamera werden die Positionen der Objekte und deren Bewegungen in der erfassten Umgebung ermittelt. Basierend auf diesen Positionen und unter Einbeziehung der Daten der Kamera wird dann nach einem oder mehreren Kriterien ermittelt, welche Objekte für den Insassen sichtbar oder nicht sichtbar sind, wobei die sichtbaren Objekte als erste Objekte und die nicht sichtbaren Objekte als zweite Objekte eingestuft werden. Bei dieser Ermittlung können ferner Bewegungsdaten des Fahrzeugs einfließen. Beispielsweise kann die Geschwindigkeit, mit der sich ein Fahrzeug bewegt, die Sichtbarkeit eines Objekts beeinflussen. Anschließend werden auf einer Anzeige der Anzeigevorrichtung im Fahrzeug darzustellende Objekte ausgewählt, wobei die darzustellenden Objekte zumindest ein erstes und zumindest ein zweites Objekt umfassen. Bei der Auswahl der darzustellenden Objekte können insbesondere Informationen über die Verkehrssituation berücksichtigt werden. Beispielsweise können bevorzugt solche zweite Objekte wiedergegeben werden, für die ein erhöhtes Kollisionsrisiko besteht. Anschließend erfolgt die Ermittlung einer Positionsverschiebung, gemäß der bestimmt wird, an welcher Position die darzustellenden Objekte für die Perspektive des Insassen des Fahrzeugs liegen. Diese Positionsverschiebung wird noch näher anhand von Fig. 4 erläutert. Schließlich wird basierend auf der ermittelten Positionsverschiebung und der ausgewählten darzustellenden Objekte eine Darstellung auf der Anzeige der Anzeigevorrichtung generiert, wobei gegebenenfalls für die dargestellten Objekte repräsentative Symbole bzw. Texturen verwendet werden. Die Darstellung enthält dabei Verbindungsgrafiken zwischen mindestens einem ersten Objekt und mindestens einem zweiten Objekt. Ferner werden nicht ausgewählte Objekte in der Darstellung unterdrückt. Die Darstellung wird dabei in einem Head-Up-Display (abgekürzt HUD) für den Fahrer wiedergegeben, kann jedoch gegebenenfalls auch auf anderen Anzeigevorrichtungen, z.B. Displays, 3D-Displays, als eine Lichtprojektion oder eine holografische Abbildung, angezeigt werden.

In einer Ausführungsform werden als sichtbare Objekte die über eine Kamera erkannten Fahrbahnbegrenzungen und Fahrbahnmarkierungen eingestuft, welche auch in der Anzeige wiedergegeben werden. Dabei wird auf der Anzeige eine virtuelle Fahrbahnebene erzeugt, welche beispielsweise basierend auf über eine Spurenerkennung ermittelten Spurenpositionen bestimmt wird und die Fahrbahnbegrenzungen und Fahrbahnmarkierungen enthält. Es wird somit eine Darstellung generiert, welche als sichtbare Objekte zumindest die erkannten Fahrbahnbegrenzungen bzw. Fahrbahnmarkierungen in einer virtuellen Fahrbahnebene umfasst und welche ferner zumindest ein Objekt beinhaltet, welches für den Fahrer nicht sichtbar ist. Die Fahrbahnbegrenzungen bzw. Fahrbahnmarkierungen und das zumindest eine nicht sichtbare Objekt sind dabei an Positionen angeordnet, bei denen die geometrischen Verhältnisse zwischen den Fahrbahnbegrenzungen bzw. Fahrbahnmarkierungen und dem zumindest einen nicht sichtbaren Objekt den realen geometrischen Verhältnissen für die Perspektive des Fahrers des Fahrzeugs entsprechen. Auf diese Weise wird eine Verfälschung der Darstellung aufgrund der versetzten Anordnung des objekterkennenden Kamerasystems bei der Wiedergabe ausgeglichen, und der Fahrer erkennt schnell den Zusammenhang zwischen den auf der Anzeige dargestellten Objekten und deren Positionen in der realen Umgebung.

Fig. 4 zeigt beispielhaft eine mittels des erfindungsgemäßen Verfahrens generierbare Darstellung. Man erkennt, dass die Darstellung die virtuelle Fahrbahnebene mit zwei Fahrspuren 2 und 3 sowie Bereichen 4 und 5 neben den Fahrspuren als sichtbare Objekte umfasst. In der Darstellung werden dabei die Bereiche neben den Fahrspuren als entsprechende Texturen realisiert. Durch ein objekterkennendes System wurde ein Objekt O in der Form einer Person erfasst, welche sich auf der Fahrbahn befindet und für den Fahrer als nicht sichtbar eingestuft wurde, beispielsweise aufgrund von schlecht reflektierender Kleidung der Person. Die Position des Objekts, wie es aus der Verbauposition des objekterkennenden Systems gesehen wird, ist dabei in Fig. 4 durch das Objekt O' angedeutet, welches nicht Bestandteil der generierten Darstellung ist. Erfindungsgemäß wird basierend auf der Position des Objekts O' nunmehr die Position ermittelt, in welcher das Objekt gesehen werden müsste, damit die wiedergegebenen Proportionen gegenüber der realen Szene, wie diese aus der Fahrerposition gesehen wird, eingehalten werden. Diese korrigierte Objektposition entspricht der Position des Objekts O, welches Teil der generierten Darstellung ist. Die neue Objektposition wird dabei mittels einer Transformation berechnet, welche in Fig. 4 mit einem entsprechenden Pfeil T angedeutet ist, der nicht Bestandteil der Darstellung ist.

Die in Fig. 4 gezeigte Darstellung kann insbesondere im Head-Up-Display des Fahrzeugs erfolgen, und die erkannten Fahrbahnbegrenzungen bzw. Fahrbahnmarkierungen können beispielsweise über ein entsprechendes Spurführungsassistenzsystem ermittelt werden. Das dargestellte Objekt kann beispielsweise basierend auf Daten verschiedener Sensoren oder mit einem Nachtsicht-System erkannt werden. In der Darstellung wird nicht das tatsächlich erfasste Objekt, sondern ein entsprechendes Symbol für dieses Objekt wiedergegeben, so dass der Fahrer sehr gut zwischen der realen Umgebung und der virtuellen Darstellung unterscheiden kann.

Wie sich aus den obigen Ausführungen ergibt, kann mit einem oder mehreren Objekterkennungssystemen nicht nur die Objekterkennung durchgeführt werden, sondern auch eine Information zur Generierung der Darstellung gewonnen werden. Dabei kann beispielsweise aus der verfügbaren Tiefeninformation ermittelt werden, wie weit ein erkanntes Hindernis vom Fahrzeug entfernt ist. Daraus wird wiederum der Versatz ermittelt, mit welchem das in der Darstellung anzuzeigende Symbol für dieses Hindernis relativ zu den Fahrbahnbegrenzungen und/oder Fahrbahnmarkierungen verschoben werden soll. Die Ermittlung dieses Versatzes beruht dabei auf der Kenntnis der geometrischen Zusammenhänge zwischen der Fahrerposition, dem Verbauort der Vorrichtung, welche die Fahrspuren erkennt (z.B. eine monokulare Kamera eines Spurführungsassistenzsystems), und dem Verbauort der Vorrichtung, welche die Tiefeninformation liefert (z.B. der 3D-TOF-Sensor eines MIDIAS-Kamerasystems oder gegebenenfalls ein entsprechender Radar-/Lidar-Sensor). Es wird somit das Symbol für das Hindernis in der Darstellung an einer solchen Stelle relativ zu den wiedergegebenen Fahrbahnmarkierungen bzw. Fahrbahnbegrenzungen angezeigt, wie das reale Hindernis relativ zu den realen Fahrbahnmarkierungen steht. Der Fahrer erhält somit, eine schnell und leicht interpretierbare Information darüber, an welcher Stelle sich das reale, bei vorliegenden Randbedingungen nicht sichtbare Hindernis befindet.

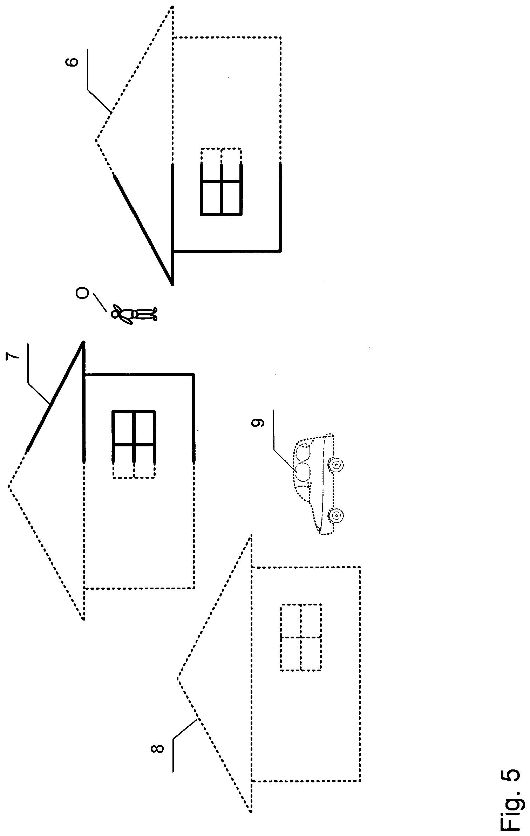

Fig. 5 zeigt ein weiteres Beispiel einer erfindungsgemäßen Darstellung von unterschiedlich gut sichtbaren Objekten auf der Anzeige einer Anzeigevorrichtung des Fahrzeugs. Es wird dabei eine Umgebung erfasst, welche als Objekte drei Häuser 6, 7 und 8, ein Fahrzeug 9 sowie eine Person O enthält. Die Person O wird dabei als nicht sichtbar und die restlichen Objekte 6 bis 9 als sichtbar eingestuft. Die auf der Anzeige dargestellten Objektkanten sind in der Figur als durchgezogene Linien gezeichnet, die nicht dargestellten Objektkanten sind als strichpunktierten Linien gezeichnet. Es werden nur solche für den Fahrer unmittelbar sichtbaren Objekte (Teile der Häuser 6 und 7) dargestellt, die zur Beschreibung der Position des unsichtbaren Objektes O, welches für den Insassen des Fahrzeugs nicht unmittelbar sichtbar ist, dienlich sind. Die dargestellten ersten Objekte bilden somit einen Rahmen, der einer richtigen und intuitiv verständlichen Wahrnehmung der Position des zweiten Objektes O dient. Die Objekte 8 und 9, die für den Insassen sichtbar sind, erscheinen auf der Anzeigevorrichtung des Fahrzeugs nicht oder werden durch die Absenkung des Kontrasts oder Anwendung eines Bildverarbeitungsfilters gegenüber den dargestellten Teilen der Objekte 6 und 7 verändert.

## Patentansprüche

1. Verfahren zur Darstellung von unterschiedlich gut sichtbaren Objekten aus der Umgebung eines Fahrzeugs für einen Benutzer aus der Perspektive eines Insassen, insbesondere des Fahrers, des Fahrzeugs auf der Anzeige einer Anzeigevorrichtung, wobei die Umgebung des Fahrzeugs zumindest teilweise mit einer oder mehreren Objekterkennungsvorrichtungen, die zumindest die Erkennung von Merkmalen eines Objekts erlauben zur automatischen Erkennung der Objekte der Umgebung, erfasst wird, **dadurch gekennzeichnet,**
- **dass** für jedes der mit der oder den Objekterkennungsvorrichtungen erkannten Objekte basierend auf einem oder mehreren Kriterien ermittelt wird, ob das jeweilige Objekt ein erstes Objekt ist, welches für den Insassen als sichtbar eingestuft wird, oder ein zweites Objekt, welches für den Insassen als nicht sichtbar eingestuft wird,
- **dass** basierend auf dem oder den Kriterien ein Objekt als sichtbar eingestuft wird, wenn in Bezug auf das Objekt eine erste Schwelle eines Sichtbarkeitsmaßes für den Insassen des Fahrzeugs überschritten ist, und ein Objekt als nicht sichtbar Objekt eingestuft wird, wenn in Bezug auf das Objekt eine zweite Schwelle desselben Sichtbarkeitsmaßes für den Insassen des Fahrzeugs unterschritten ist, wobei die zweite Schwelle niedriger als die erste Schwelle ist,
- **dass** das Sichtbarkeitsmaß eines Objekts in der Form einer Wahrscheinlichkeit ausgedrückt wird, mit der das jeweilige erkannte Objekt durch ein statistisches Sehsystem gesehen bzw. übersehen wird, und abhängig von den spektralen Eigenschaften des von dem jeweiligen Objekt abgestrahlten Lichts ermittelt wird, wobei eine Lichtverteilung umfassend eine Helligkeitsverteilung und/oder Spektralverteilung von Leuchtflächen des jeweiligen erkannten Objekts und gegebenenfalls in der Umgebung ermittelt wird,
- **dass** für eine Anzahl von erkannten Objekten umfassend zumindest ein erstes, d.h. als sichtbar eingestuftes, Objekt und zumindest ein zweites, d.h. als nicht sichtbar eingestuftes, Objekt jeweilige Positionen der Objekte für die Anzeige ermittelt werden, bei denen die geometrischen Verhältnisse zwischen der Anzahl von Objekten im Wesentlichen den realen geometrischen Verhältnissen für die Perspektive des Insassen des Fahrzeugs entsprechen;
- **dass** die Anzahl der Objekte an den ermittelten Positionen auf der Anzeige dargestellt wird.

2. Verfahren nach Anspruch 1, **dadurch gekennzeichnet, dass** die Unterscheidung zwischen ersten und zweiten Objekten mit Hilfe von mindestens zwei Arten von Sensoren und/oder Objekterkennungsvorrichtungen erfolgt.

3. Verfahren nach einem der vorhergehenden Ansprüche, **dadurch gekennzeichnet, dass** die von dem Benutzer des Fahrzeugs wahrnehmbare Position der Anzeige der Anzeigevorrichtung außerhalb des Fahrzeuginnenraums liegt.

4. Verfahren nach einem der vorhergehenden Ansprüche, **dadurch gekennzeichnet, dass** die auf der Anzeige dargestellten ersten und zweiten Objekte zumindest teilweise symbolhaft wiedergegeben werden.

5. Verfahren nach einem der vorhergehenden Ansprüche, **dadurch gekennzeichnet, dass** nur solche erste Objekte auf der Anzeige dargestellt werden, welche die auf der Anzeige dargestellten zweiten Objekte zumindest von zwei oder drei räumlichen Seiten umgeben.

6. Verfahren nach einem der vorhergehenden Ansprüche, **dadurch gekennzeichnet, dass** an sich sichtbare Teile eines Objekts, das an einer ermittelten Position auf der Anzeige dargestellt wird, nicht dargestellt und/oder in der Darstellung auf der Anzeige unterdrückt werden, wenn das Sichtbarkeitsmaß des Objekts die zweite Schwelle unterschreitet.

7. Verfahren nach einem der vorhergehenden Ansprüche, **dadurch gekennzeichnet, dass** eine Auswahl der auf der Anzeige angezeigten ersten und zweiten Objekte in Abhängigkeit von den odometrischen Daten des Fahrzeugs und/oder einer automatisch ausgewerteten Verkehrssituation erfolgt.

8. Verfahren nach einem der vorhergehenden Ansprüche, **dadurch gekennzeichnet, dass** die jeweiligen Positionen der ersten und zweiten Objekte für die Anzeige mit Hilfe einer Tiefeninformation betreffend die reale Position der ersten und zweiten Objekte relativ zum Fahrzeug bestimmt werden, wobei die Tiefeninformation mit Hilfe zumindest einer Objekterkennungsvorrichtung ermittelt wird.

9. Verfahren nach einem der vorhergehenden Ansprüche, **dadurch gekennzeichnet, dass** eine Auswahl der angezeigten ersten und/oder zweiten Objekte basierend auf einem Kriterium erfolgt, bei dem Objekte mit erhöhtem Kollisionsrisiko mit dem Fahrzeug als anzuzeigende Objekte bevorzugt werden.

10. Verfahren nach einem der vorhergehenden Ansprüche, **dadurch gekennzeichnet, dass** zusätzlich zu der Darstellung eines Objekts, insbesondere eines zweiten Objekts, auf der Anzeige eine vergrößerte Darstellung desselben Objekts angezeigt wird, welche sich von der Darstellung auf der Anzeige insbesondere durch ihre Perspektive und/oder verwendeten Bildparameter unterscheidet.

11. Verfahren nach Anspruch 10, **dadurch gekennzeichnet, dass** zusätzliche grafische Elemente angezeigt werden, die den Bezug der vergrößerten Darstellung zu der Position des Objekts auf der Darstellung anzeigen.

12. Verfahren nach einem der vorhergehenden Ansprüche, **dadurch gekennzeichnet, dass** der auf der Anzeige dargestellte Teil der Umgebung des Fahrzeugs vom Vorhandensein von mindestens einem zweiten Objekt, insbesondere von mindestens einem verkehrsrelevanten zweiten Objekt, abhängt.

13. Verfahren nach einem der vorhergehenden Ansprüche, **dadurch gekennzeichnet, dass** die auf der Anzeige dargestellten ersten und zweiten Objekte mit Hilfe weiterer graphischer Elemente verbunden werden.

## Claims

1. A method for presenting objects of a differing clear visibility, from the surroundings of a vehicle, for a user from the perspective of an occupant, more especially the driver, of the vehicle on the display of a display device, wherein the surroundings of the vehicle are at least partly detected using one or more object recognition devices which at least allow the recognition of features of an object for the automatic recognition of the objects of the surroundings, **characterised in that**
- it is determined for each of the objects recognised by the object recognition device or devices, based on one or more criteria whether the respective object is a first object which is classified for the occupant as being visible, or a second object which is classified for the occupant as being invisible,
- **in that** based on the criterion or criteria, an object is classified as being visible if, in respect of the object, a first threshold of a visibility measurement is exceeded for the occupant of the vehicle, and an object is classified as being an invisible object if, in respect of the object, a second threshold of the same visibility measurement is not met for the occupant of the vehicle, wherein the second threshold is lower than the first threshold,
- **in that** the visibility measurement of an object is expressed as a probability, by which the respective recognised object is seen or overlooked by a statistical visual system and is determined subject to the spectral characteristics of the light emitted from the respective object, wherein a light distribution comprising a brightness distribution and/or a spectral distribution of illumination surfaces of the respective recognised object and optionally in the surroundings is determined,
- **in that** for a number of recognised objects comprising at least one first object, i.e. an object classified as being visible, and at least one second object, i.e. an object classified as being invisible, respective positions of the objects are determined for the display, for which positions the geometric relationships between the number of objects substantially correspond to the real geometric relationships for the perspective of the occupant of the vehicle;
- **in that** the number of objects in the determined positions is presented on the display.

2. A method according to claim 1, **characterised in that** the distinction between first objects and second objects is made by means of at least two types of sensors and/or object recognition devices.

3. A method according to any of the preceding claims, **characterised in that** the position, perceivable by the user of the vehicle, of the display of the display device is located outside the interior of the vehicle.

4. A method according to any of the preceding claims, **characterised in that** the first and second objects presented on the display are represented in an at least partly symbolic manner.

5. A method according to any of the preceding claims, **characterised in that** only those first objects are presented on the display which surround the second objects presented on the display at least on two or three spatial sides.

6. A method according to any of the preceding claims, **characterised in that** parts, visible per se, of an object which is presented on the display in a determined position are not shown and/or are suppressed in the presentation on the display if the visibility measurement of the object falls below the second threshold.

7. A method according to any of the preceding claims, **characterised in that** the first and second objects, shown on the display, are selected subject to the odometric data of the vehicle and/or of an automatically evaluated traffic situation.

8. A method according to any of the preceding claims, **characterised in that** the respective positions of the first and second objects are determined for the display by means of depth information relating to the real position of the first and second objects relative to the vehicle, the depth information being determined by means of at least one object recognition device.

9. A method according to any of the preceding claims, **characterised in that** the displayed first and/or second objects are selected based on a criterion by which objects having an increased risk of collision with the vehicle are preferred as objects which are to be displayed.

10. A method according to any of the preceding claims, **characterised in that** in addition to the presentation of an object, more especially of a second object, on the display, an enlarged presentation of the same object is displayed which differs more especially from the presentation on the display by its perspective and/or by image parameters which are used.

11. A method according to claim 10, **characterised in that** additional graphic elements are displayed which indicate the connection of the enlarged presentation to the position of the object on the presentation.

12. A method according to any of the preceding claims, **characterised in that** the part of the surroundings of the vehicle shown on the display depends on the presence of at least one second object, more especially on at least one traffic-relevant second object.

13. A method according to any of the preceding claims, **characterised in that** the first and second objects shown on the display are connected by means of further graphic elements.

## Revendications

1. Procédé permettant de représenter à un utilisateur des objets différemment bien visibles présents dans l'environnement d'un véhicule, à partir de la perspective d'un occupant, en particulier du conducteur du véhicule, sur l'affichage d'un dispositif d'affichage, l'environnement du véhicule étant détecté au moins partiellement à l'aide d'un ou de plusieurs dispositif(s) de reconnaissance d'objets qui permettent de reconnaître au moins les caractéristiques d'un objet pour permettre la reconnaissance automatique des objets de l'environnement,
**caractérisé en ce que**
pour chacun des objets reconnus avec le dispositif de reconnaissance d'objets, il est déterminé à partir d'un ou de plusieurs critères si cet objet est un premier objet qui est classé comme étant visible pour les occupants ou un second objet qui est classé comme étant non visible pour les occupants,
à partir du ou des critère(s), un objet est classé comme étant visible lorsque, concernant cet objet, un premier seuil d'une mesure de visibilité pour les occupants du véhicule est dépassé, et un objet est classé comme étant non visible si, concernant cet objet, si la même mesure de visibilité pour les occupants du véhicule passe au-dessous d'un second seuil, le second seuil étant inférieur au premier seuil,
la mesure de visibilité d'un objet est exprimée sous la forme de la probabilité que l'objet respectivement reconnu puisse être vu ou aperçu par un système optique statistique, et, est déterminé en fonction des propriétés spectrales de la lumière diffusée par cet objet, une répartition de la lumière comprenant une répartition de la clarté et/ou une répartition spectrale de surfaces lumineuses de l'objet reconnu et le cas échéant dans l'environnement étant déterminée,
pour un ensemble d'objets reconnus comprenant au moins un premier objet, c'est-à-dire un objet classé comme étant visible et un second objet, c'est-à-dire un objet classé comme étant non visible, on détermine pour l'affichage des positions respectives des objets, dans lesquelles les rapports géométriques entre l'ensemble d'objets correspondent essentiellement aux rapports géométriques réels pour la perspective des occupants du véhicule, et
l'ensemble d'objets est représenté sur l'affichage dans les positions déterminées.

2. Procédé conforme à la revendication 1,
**caractérisé en ce que**
la distinction entre des premiers objets et des seconds objets est effectuée à l'aide d'au moins deux types de capteurs et/ou de dispositifs de reconnaissance d'objets.

3. Procédé conforme à l'une des revendications précédentes, **caractérisé en ce que**
la position de l'affichage du dispositif d'affichage pouvant être observée par l'utilisateur du véhicule est située à l'extérieur de l'habitacle du véhicule.

4. Procédé conforme à l'une des revendications précédentes, **caractérisé en ce que**
les premiers et les seconds objets représentés sur l'affichage sont reproduits au moins partiellement de manière symbolique.

5. Procédé conforme à l'une des revendications précédentes, **caractérisé en ce que**
seuls sont représentés sur l'affichage des premiers objets qui entourent les seconds objets représentés sur l'affichage au moins par deux ou trois côtés spatiaux.

6. Procédé conforme à l'une des revendications précédentes, **caractérisé en ce que**
des parties visibles en elles-mêmes d'un objet qui est représenté sur l'affichage dans une position déterminée ne sont pas représentées et/ou sont atténuées dans la représentation sur l'affichage lorsque la mesure de visibilité de l'objet passe au-dessous du second seuil.

7. Procédé conforme à l'une des revendications précédentes, **caractérisé en ce qu'**
une sélection des premiers objets et des seconds objets affichés sur l'affichage est effectuée en fonction des données odométriques du véhicule et/ou de la situation du trafic automatiquement évaluée.

8. Procédé conforme à l'une des revendications précédentes, **caractérisé en ce que**
les positions respectives des premiers objets et des seconds objets pour l'affichage sont déterminées à l'aide d'une information de relief concernant la position réelle des premiers objets et des seconds objets relativement au véhicule, l'information de relief étant détectée à l'aide d'au moins un dispositif de reconnaissance d'objet.

9. Procédé conforme à l'une des revendications précédentes, **caractérisé en ce qu'**
une sélection des premiers objets et/ou des seconds objets affichés est effectuée sur la base d'un critère selon lequel des objets présentant un risque de collision augmenté avec le véhicule sont préférés en tant qu'objets devant être affichés.

10. Procédé conforme à l'une des revendications précédentes, **caractérisé en ce que**
en plus de la représentation d'un objet, en particulier d'un second objet, est affichée sur l'affichage une représentation agrandie du même objet qui se distingue de la représentation sur l'affichage, en particulier par sa perspective et/ou le paramètre d'image utilisé.

11. Procédé conforme à la revendication 10,
**caractérisé en ce que**
l'on affiche en outre des éléments graphiques qui indiquent le rapport entre la représentation agrandie et la position de l'objet sur la représentation.

12. Procédé conforme à l'une des revendications précédentes, **caractérisé en ce que**
la partie de l'environnement du véhicule représentée sur l'affichage dépend de la présence d'au moins un second objet, en particulier d'au moins un second objet important pour le trafic.

13. Procédé conforme à l'une des revendications précédentes, **caractérisé en ce que**
les premiers objets et les seconds objets représentés sur l'affichage sont reliés à l'aide d'autres éléments graphiques.
